# EUROPEAN PATENT APPLICATION

(11) **EP 3 932 825 A1**
(43) Date of publication of application: **05.01.2022**
(21) Application number: 20851582.5
(22) Date of filing: 06.03.2020
(51) Int. Cl.: B65D 47/34, C08L 23/12

(54) **IMPROVED PUMP CORE AND ENVIRONMENTALLY-FRIENDLY HIGH-TECH MATERIAL PREPARATION METHOD THEREFOR**

(30) Priority: 12.08.2019 CN 201910739479
(71) Applicant: Zhejiang Z&Z Industrial Co., Ltd., Yuyao City, Zhejiang 315400 (CN)
(72) Inventor: HUANG, Jianyi, NINGBO, Zhejiang 315400 (CN)
(74) Representative: ZHAOffice SPRL
(86) International application number: PCT/CN2020/078153
(87) International publication number: WO 2021/027276

(57) **Abstract**

The present invention relates to vacuum pump, to the extent that the difficulties of putting similar products in automatic assembly and production, assembly would be resolved. A pump core assembly, the pump body of the pump core assembly is provided with an elastic sleeve, the inner diameter of the upper plug of the inner plug outwardly of the pump body is provided with a lower elastic cavity that is larger than the inner diameter of the plug, the inner diameter hole of the upper plug of the inner plug is provided with the upper elastic cavity of the outer diameter of the valve stem whose outer diameter is smaller than the inner diameter of the upper plug.

## Description

### Technical Field

The present invention relates to emulsion pump or vacuum pump, or specifically, a kind of vacuum pump.

### Background

Emulsion bottles and vacuum pumps are containers for lotion access. They mainly use the principle of a push-type micro sprayer, and omit the setting of the baffle in the head cap, so that the lotion passes through the suction tube and the pump body, and then passes from the head of the nozzle. The cap flows out without being sprayed out due to the blocking of the flap. The difference between the two is mainly whether there is a through hole on one side of the pump body and whether there is a suction tube; the main structure of this type of lotion bottle and vacuum pump is a lotion cap and a pump core, some of which use an external spring. The structure is convenient for its use as a common part and automated production assembly. For example, the application number 201510489564.0 disclosed in the Chinese patent literature and the application publication date 2015.11.11, the invention name is "spring external pump core and its use method"; but the spring sealing of the above pump core depends on the large ring and head cap in the specific application With structural design, springs are difficult to seal independently in the pump core assembly, the spring stability is not good, and the external situation of the springs in the pump core assembly makes it a common component used in the automated assembly and production of similar products, which is easily affected by the equipment.

### Summary of Invention

In order to overcome the above-mentioned shortcomings, the object of the present invention is to provide an improved pump core for a vacuum pump or an emulsion pump and a method for preparing environmentally friendly high-tech materials to make it difficult to use the existing similar products for automated assembly and production. Technical problems of environmental protection and rigidity of raw materials produced. Its purpose is achieved through the following technical solutions.

A vacuum pump comprising a pump core assembly, a pump body of the pump core assembly is provided with an elastic sleeve, a valve pin, and a piston. The elastic sleeve is disposed in a slotted hole at a suction pipe end, the piston is nested in a nail outer diameter of the valve pin, the outer diameter of the piston is sealed against inner walls of the pump body, the outer diameter of the nail ring groove at a nail end of the valve pin is snapped-fit to a buckle ring rib in the valve stem, a spring is disposed in an area between the outer diameter of the valve stem outwardly of the pump body and an inner plug outwardly of the pump body, guide ribs are disposed on the inner walls of an inner ring of the piston; wherein the outer diameter of the valve stem in the said pump body is nested into the inner diameter of the inner plug, the inner diameter of the pump intake of the pump body is snapped-fit and sealed against the outer diameter of a lower plug of the inner plug, the inner diameter of an upper plug of the inner plug outwardly of the pump body is provided with a lower elastic cavity that is larger than the inner diameter of the inner plug, the inner diameter hole of the upper plug of the inner plug is provided with an upper elastic cavity of the outer diameter of the valve stem whose outer diameter is smaller than the inner diameter of the upper plug, the spring is disposed in the cavity formed by nesting the upper spring cavity of the valve stem into the lower spring cavity of the inner plug, which means that the outer diameter of the upper spring cavity at the stem rim of the valve stem is upper ring, the upper ring of the valve stem is nested into the inner diameter of the upper plug of the inner plug. The said spring is a metal spring, so that the spring is securely arranged in the spring cavity formed by the outer diameter of the valve stem and the outer diameter of the inner plug. The said vacuum pump is intended as a common part after production and assembly, which means that it can be mounted in the vacuum pump, emulsion pump and other products through automatic production. In the production and assembly of the said vacuum pump, the spring as a part of the vacuum pump is not susceptible to the interference by equipment or other objects.

An upper stepped groove is disposed in a bottom part of the inner diameter of the upper ring of the said valve stem, a lower stepped groove is disposed in the inner diameter of the inner plug at the pump intake of the pump body, one end of the spring is fit and secured to the lower stepped groove of the inner plug, and vertical grooves are uniformly distributed in the outer diameter of the valve stem at the spring. The said structure facilitates two ends of the spring to be secured onto the valve stem and the inner plug respectively, and makes sure that the spring is used smoothly in the outer diameter of the valve stem, especially the conduction and stability of pressure within the spring cavity.

An inner ring of the piston is provided underneath the buckle ring rib of the said valve stem, the tip of the inner ring of the piston is provided with an inner ring rim of the piston extended out of the ring rim of the piston, the inner ring of the piston of the valve stem is nested hermetically with the inner ring rim of the piston, the ring rim in the bottom of the inner ring of the piston is sealed fit to the nailhead ring groove of the valve pin, a conical bottom cavity is disposed in the bottom part of the valve pin. When pressing the first valve pin, the bevel ring of the outer diameter of the bottom cavity hole of the valve pin is set against and limited to the inner walls of the pump body above the elastic sleeve. Thereby, the piston is further sealed to the valve stem through the inner ring rim of the piston, and sealed protectively to the valve pin when returning and pressing, the stroke of the valve pin is limited onto the inner walls above the elastic sleeve of the pump body, and formed a buffer cavity with the elastic sleeve through the bottom cavity in the bottom part of the valve pin, so that the pressure within the pump body would be stabilized when pressing.

A Z-shaped curved adjoining rib and a hallow hole are disposed in an area between a cartridge of the said elastic sleeve and a center piece at one side of the sleeve opening, the center piece of the elastic sleeve is set against a center conical hole of the pump body, the center conical hole of the pump body is an inlet hole of the pump body, a stepped ring diameter is provided above the center conical hole of the pump body, and the other side of the sleeve opening of the cartridge is limited to the stepped ring diameter of the pump body. The available general pump core elastic sleeves are poorly sealed when equipped with a piston, the elastic sleeve and pump body as a part of the vacuum pump are constructed in plane-plane sealing structure, which is not easy to seal and there is less sealing faces, uneven or slanted plane may disable the sealing performance. When pressing and returning, the adjoining ribs through the elastic sleeve are slightly deformed, so that the elastic sleeve can open for liquid entry, or close for sealing.

The pump body groove ring and the raised ring of the inner plug are disposed on the area where the outer diameter of the pump intake of the said pump body is fit to the inner plug respectively; the pump body groove ring of the said pump body and the raised ring of the inner plug are interference-fit and secured to a fixing ring groove of the inner diameter of the upper ring of the large ring. The said structure would facilitate the assembly and fixing of the vacuum pump in similar products. The vacuum pump is secured to the actual embodiment of the large ring in similar products through the concave ring of the pump body and the convex ring of the inner plug.

The bottom part of the inner ring of the lower ring of the said large ring is provided with large ring threaded groove and the lower inner ring groove of the large ring, the lower outer ring groove of the large ring is disposed in the outer diameter of the large ring threaded groove in the large ring, the lower outer ring groove of the large ring is connected to the ribbed groove of the large ring underneath, the inner diameter of the ribbed groove of the large ring is larger than that of the lower outer ring groove of the large ring, there is a clearance between the inner diameter of the lower outer ring groove of the large ring underneath the fixing ring groove of the large ring lower ring and the outer diameter of the pump body, raised ribs are disposed on the inner walls of the large ring ribbed groove, a top groove is disposed in the outer diameter of the fixing ring groove on the tip of the large ring, an inner ring of the head cap is snapped-fit to the inner diameter of the stem rim of the valve stem, an outer ring of the head cap is nested to the inner diameter of the top groove of the large ring. The diameter of the lower ring outer diameter of the large ring, the diameter of the upper ring outer diameter of the large ring, and that of the outer diameter of the head cap decrease in descending order. The embodiment as described above is the specific structure of the vacuum pump and the emulsion pump, wherein the said structure of the large ring is prepared by one-piece injection molding.

The structure of the present invention is reasonably designed, user-friendly and easily assembled, all components are mounted tightly and firmly, with good sealing and stable properties, the spring is stable and well-isolated,; it can suitably function as a vacuum pump or one-piece plastic vacuum pump externally provided on the spring, and as structural modification of its similar products.

### Brief Description of the Drawings

FIG 1 is a schematic cross-sectional view of the embodiment of the present invention at initial state.
FIG.2 is schematic cross-sectional view of the structure of FIG 1 when pressing.
FIG.3 is a schematic cross-sectional view of the pump core assembly in the embodiment of the present invention at the exploded state
FIG.4 is a schematic cross-sectional view of the composite state of FIG.3, where the framed part as shown in the figure is enlarged and the arrow indicates the liquid flow direction.
FIG 5 is a schematic diagram of the three-dimensional structure of the valve stem in the first embodiment of the present invention.
FIG.6 is a schematic diagram of the three-dimensional structure of the elastic sleeve in the embodiment of the present invention.

Serial number and name of the drawings: 1. Suction tube, 2. Elastic sleeve, 201. Center piece, 202. Sleeve, 3. Pump body, 301. Center conical hole, 302. Stepped ring diameter, 4. Valve pin, 5. Piston, 501. Inner ring rim of the piston, 6. Inner plug, 601. Lower plug, 602. Lower stepped groove, 603. Upper plug, 7. Valve stem, 701. Vertical groove, 702. Upper ring, 703. Inner ring of the piston, 8. Spring, 9. Large ring, 10. Head cap.

### Embodiments

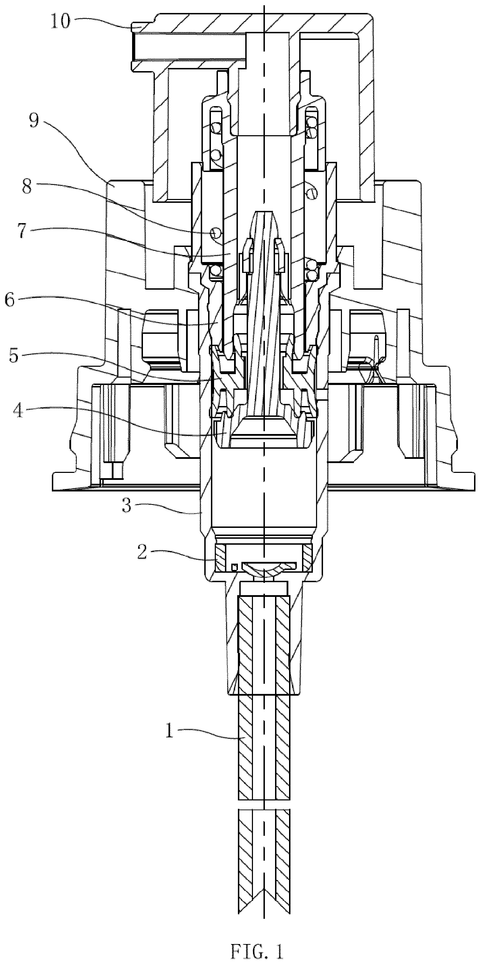

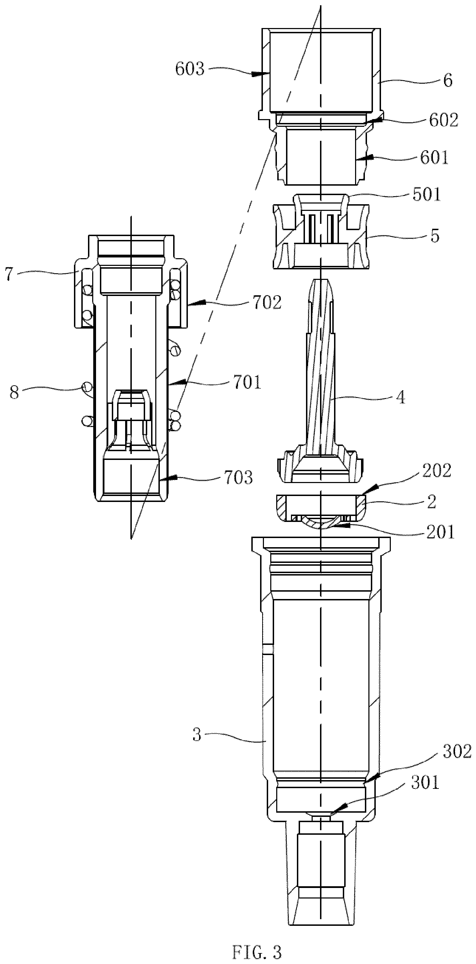

The structure of the present invention will be further described by referring to the accompanying drawings. Referring to Embodiment as shown in FIGS. 1- FIGS.6, the said vacuum pump comprises a pump core assembly, the pump body 3 of the pump core assembly is provided with an elastic sleeve 2, a valve pin 4, and a piston 5. The elastic sleeve is disposed in the slotted hole at the suction pipe end, the piston is nested in the nail outer diameter of the valve pin, the outer diameter of the piston is sealed against the inner walls of the pump body, the outer diameter of the nail ring groove at the nail end of the valve pin is snapped-fit to the buckle ring rib in the valve stem 7, a spring 8 is disposed in an area between the outer diameter of the valve stem 6 outwardly of the pump body and the inner plug outwardly of the pump body, guide ribs are disposed on the inner walls of the inner ring of the piston. Its specific structure is described below: the outer diameter of the valve stem in the said pump body is nested into the inner diameter of the inner plug, the inner diameter of the pump intake of the pump body is snapped-fit and sealed against the outer diameter of the lower plug 601 of the inner plug, the inner diameter of the upper plug 603 of the inner plug outwardly of the pump body is provided with a lower elastic cavity that is larger than the inner diameter of the plug, the inner diameter hole of the upper plug of the inner plug is provided with the upper elastic cavity of the outer diameter of the valve stem whose outer diameter is smaller than the inner diameter of the upper plug, the spring is disposed in the cavity formed by nesting the upper spring cavity of the valve stem into the lower spring cavity of the inner plug, which means that the outer diameter of the upper spring cavity at the stem rim of the valve stem is upper ring 702, the upper ring of the valve stem is nested into the inner diameter of the upper plug of the inner plug. An upper stepped groove is disposed in the bottom part of the inner diameter of the upper ring of the said valve stem, a lower stepped groove 602 is disposed in the inner diameter of the inner plug at the pump intake of the pump body, one end of the spring is fit and secured to the lower stepped groove of the inner plug, and vertical grooves 701 are uniformly distributed in the outer diameter of the valve stem at the spring.

The pump body groove ring and the raised ring of the inner plug are disposed on the area where the outer diameter of the pump intake of the said pump body is fit to the inner plug respectively, an inner ring of the piston 703 is provided underneath the buckle ring rib of the said valve stem, the tip of the inner ring of the piston is provided with an inner ring rim of the piston 501 extended out of the ring rim of the piston, the inner ring of the piston of the valve stem is nested hermetically with the inner ring rim of the piston, the ring rim in the bottom of the inner ring of the piston is sealed fit to the nailhead ring groove of the valve pin, a conical bottom cavity is disposed in the bottom part of the valve pin. When pressing the first valve pin, the bevel ring of the outer diameter of the bottom cavity hole of the valve pin is set against and limited to the inner walls of the pump body above the elastic sleeve. A Z-shaped curved adjoining rib and a hallow hole are disposed in an area between the cartridge 202 of the said elastic sleeve and the center piece 201 at one side of the sleeve opening, the center piece of the elastic sleeve is set against the center conical hole 301 of the pump body, the center conical hole of the pump body is the inlet hole of the pump body, a stepped ring diameter 302 is provided above the center conical hole of the pump body.

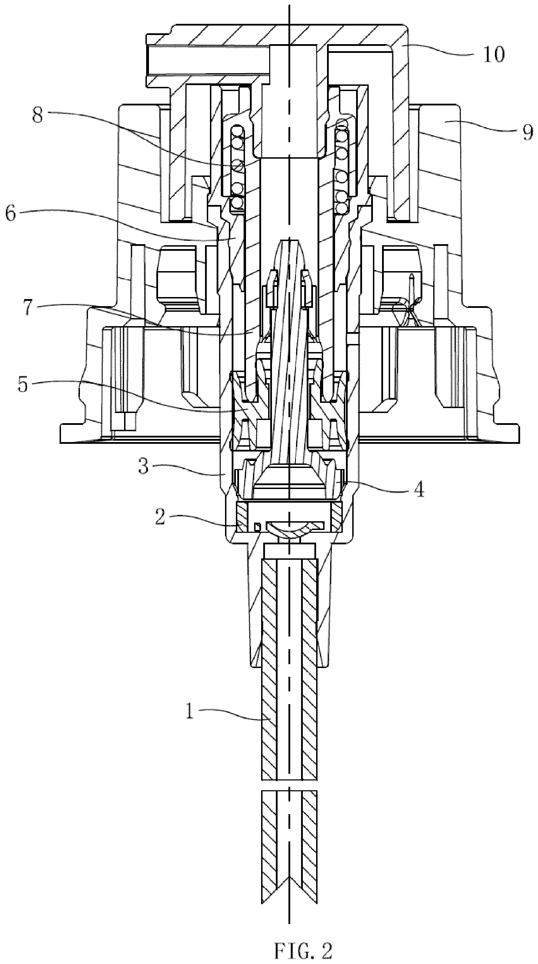

Referring to the embodiment of the vacuum pump application as shown in FIG 1 and 2, the pump body groove ring of the said pump body and the raised ring of the inner plug are interference-fit and secured to the fixing ring groove of the inner diameter of the upper ring of the large ring 9, the bottom part of the inner ring of the lower ring of the said large ring is provided with large ring threaded groove and the lower inner ring groove of the large ring, the lower outer ring groove of the large ring is disposed in the outer diameter of the large ring threaded groove in the large ring, the lower outer ring groove of the large ring is connected to the ribbed groove of the large ring underneath, the inner diameter of the ribbed groove of the large ring is larger than that of the lower outer ring groove of the large ring, there is a clearance between the inner diameter of the lower outer ring groove of the large ring underneath the fixing ring groove of the large ring lower ring and the outer diameter of the pump body, raised ribs are disposed on the inner walls of the large ring ribbed groove, a top groove is disposed in the outer diameter of the fixing ring groove on the tip of the large ring, the inner ring of the head cap is snapped-fit to the inner diameter of the stem rim of the valve stem, the outer ring of the head cap is nested to the inner diameter of the top groove of the large ring. The diameter of the lower ring outer diameter of the large ring, the diameter of the upper ring outer diameter of the large ring, and that of the outer diameter of the head cap decrease in descending order.

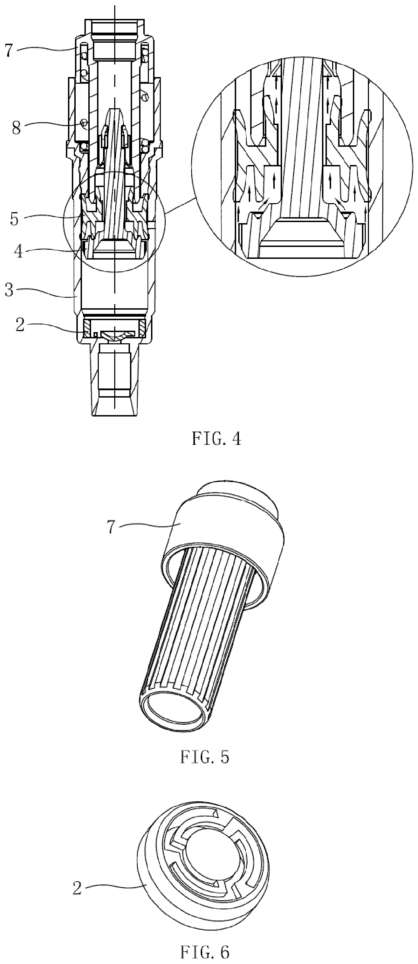

The spring structure of the vacuum pump is modified in the following manner: the inner hole of the spring is nested outwardly of the vertical groove of the valve stem cylinder, one end of the spring is secured in the upper stepped groove of the first valve steam and the other end is secured in the lower stepped groove of the inner plug. Thereby, the spring does not come into contact with the liquid whenever in use and avoid having chemical reaction with liquid, its appearance and function will not be affected, free from liquid contamination or deterioration. The sealing structure of the piston equipped with the valve stem is modified in the following manner: the inner ring of the piston on the inner walls in the bottom end of the valve stem is sealed to the ring rim in the piston of the piston sealing ribs, so that a sealing structure following the liquid direction would be formed. For trial spray, as shown in FIG.4, the sealing at Point A can be hardly affected by the hydraulic pressure during the liquid trial spray, which can greatly improve the liquid leakage in trial spray due to rapid trial spray or under high viscosity and high hydraulic pressure. With respect to the original design of the spring pump core that is outwardly placed, the sealing point is counterflow liquid sealing, which may easily leak due to liquid impact. Effective sealing is impossible when rapidly pressing or under high viscosity and high hydraulic pressure.

The trial spraying process of edge skewing and pressing of the vacuum pump is modified in the following way: the vertical groove of the valve stem cylinder passes through the inner hole of the upper plug of the valve stem, to the extent that the valve stem moves in a vertical center manner with the inner plug during the vertical movement. And the upper ring in the upper part of the valve stem is placed in the inner hole of the upper plug of the inner plug, to the further extent that the centers of the valve stem and the inner plug would form a double-layer control center structure; in this way, the skewing of the valve stem that leads to the skewing of the head cap after the assembly process can be effectively improved, and defects such as liquid leakage or no suction power during the trial spraying process of edge skewing and pressing would be greatly improved. As shown in FIG.2, when the vacuum pump presses the head cap at its edge in actual application, the head cap becomes skewed due to uneven distribution of force, leading to the skewing of the first valve steam. As the stroke further presses, the upper ring in the upper part of the valve stem gradually increases the straight-out fitting to the inner walls of the upper plug of the inner plug, which can effectively control the skewing degree of the first valve steam, make sure that the parts adjoined to the first valve steam is immune to the skewing, and greatly improve the stability and extensive use of the product. In the original design of externally provided spring pump core of similar types, the valve stem is only fit to the inner hole of the inner plug. Consequently, during the trial spraying process of edge pressing the head cap, the first valve steam is likely to cause the skewing of the valve pin and the piston, causes many functional abnormalities, poor stability and narrow suitability of the product.

The sealing fit of the elastic sleeve and the pump body of the vacuum pump is modified in the following way: the elastic sleeve is placed in the pump body, the arc convex surface of the center piece of the spring is sealed to the arc concave surface of the center conical hole of the pump body, the cartridge rim of the elastic sleeve is snapped-fit to the stepped ring diameter ribs above the center conical hole of the pump body; when pressing and returning, the adjoining ribs through the elastic sleeve are slightly deformed, so that the elastic sleeve can open for liquid entry, or close for sealing. In the original design of externally provided spring pump cores of similar types available on the market, when the elastic sleeve is equipped with a piston structure, the elastic sleeve and pump body are constructed in plane-plane sealing structure, which is not easy to seal and there is less sealing faces, uneven or slanted plane may disable the sealing performance. The arc convex-concave sealing structure, modified from the elastic sleeve structure of the vacuum pump, significantly increases the sealing fit surface than the plane structure, and the arc is convex-concave fit. If there is a slight skewing, it will be automatically guided to return with the arc skewed surface, which would greatly improve stability and sealing performance.

The valve pin of the above-mentioned pump core is made of environmentally-friendly high-tech materials, and the environmentally-friendly high-tech materials are composed of the following parts by weight:
PP resin 60-70 parts, toughening agent 5-10 parts, compatibilizer 2-8 parts, 5-10 parts of reinforcing powder, 3-5 parts of graphene, 0.2-0.4 parts of antioxidant, 0.5-2 parts of lubricant, 0.1-0.3 parts of silane coupling agent;
the PP resin is homo-PP resin, copolymer PP One of resin or a mixture of both;
the toughening agent is any one of polyolefin elastomer, ethylene/methacrylic acid copolymer, ethylene-vinyl acetate copolymer, or a mixture of any two or three of them;
the reinforced powder is a mixture of mica powder and glass microbeads, organic fiber microbeads or asbestos microbeads mixed according to 1-5:2-4, and the particle size of the reinforced powder is 400 mesh -800 mesh;
the compatibilizer is one or a mixture of polypropylene grafted maleic anhydride and polyethylene grafted maleic anhydride; the toughening agent is POM, PVC, PET or PETG;
the antioxidant is a mixture of antioxidant 1076 and antioxidant 168 in a weight ratio of 1:1;
the lubricant is any one of polyethylene wax, ethylene bis-stearamide, and pentaerythritol tetrastearate;
The silane coupling agent is one of silane coupling agent KH550 or silane coupling agent KH560.

The environmentally-friendly high-tech material includes the following preparation steps:
1) Powder treatment: pour the above weight parts of the reinforced powder into a mixer equipped with a high-pressure sprayer, and while stirring the powder, spray the above weight parts of silane coupling; the pressure of the high-pressure sprayer is 0.5MPa-1.0MPa, the stirring temperature is 60-80°C, and the stirring time is 25-35min;
2), extrusion granulation: the above weight parts of PP resin, graphene, toughening agent , Compatibilizers, antioxidants, and lubricants are evenly mixed and enter the extruder barrel from the main feed port of the twin-screw extruder, and the reinforced powder treated in step 1) is removed from the side of the twin-screw extruder. The feeding port enters the extruder barrel for mixing and extruding. The temperature in the extruder barrel is 180-230°C, and the screw speed is 200-800r/min. After extrusion, it is cooled by a cooling water tank and pelletized by a pelletizer. Made into finished products.

The specific implementation examples of the environmentally friendly high-tech materials are as follows:
Example 1: It includes the following preparation steps:
   1), powder treatment: pour 5 parts by weight of reinforced powder into a mixer equipped with a high-pressure sprayer, while stirring the powder, spray 0.2 parts by weight Silane coupling agent KH550, the pressure of the high-pressure sprayer is 0.5MPa, the stirring temperature is 60°C, and the stirring time is 35min;
   2), extrusion granulation: 60 parts of PP resin, 3 parts of graphene, and 5 parts by weight Toughener, 2 parts of compatibilizer, 0.2 part of antioxidant, and 0.5 part of lubricant are mixed evenly and enter the extruder barrel from the main feed port of the twin-screw extruder, and the reinforced powder processed in step 1) From the side feeding port of the twin-screw extruder into the extruder barrel for mixing and extruding. The temperature in the extruder barrel is 180°C and the screw speed is 800r/min. After extrusion, it is cooled by a cooling water tank and pelletized. Machine granulation to make finished products.
Example 2: It includes the following preparation steps: 1) Powder treatment: Pour 50 parts by weight of the reinforced powder into a mixer equipped with a high-pressure sprayer, and while stirring the powder, spray 0.1 part by weight Silane coupling agent KH560, the pressure of the high-pressure sprayer is 0.6MPa, the stirring temperature is 80°C, and the stirring time is 25min; 2), extrusion granulation: 65 parts of PP resin, 5 parts of graphene, 10 parts by weight Toughener, 8 parts of compatibilizer, 0.4 parts of antioxidant, and 2 parts of lubricant are mixed evenly and enter the extruder barrel from the main feed port of the twin-screw extruder, and the reinforced powder processed in step 1) From the side feeding port of the twin-screw extruder into the extruder barrel for mixing and extruding. The temperature in the extruder barrel is 230°C, and the screw speed is 200r/min. After extrusion, it is cooled by a cooling water tank and pelletized. Machine granulation to make finished products.
Example 3: It includes the following preparation steps:
   1), powder treatment: pour 15 parts by weight of reinforced powder into a mixer equipped with a high-pressure sprayer, while stirring the powder, spray 0.2 parts by weight Silane coupling agent KH550, the pressure of the high-pressure sprayer is 0.8MPa, the stirring temperature is 65°C, and the stirring time is 32min;
   2), extrusion granulation: 70 parts of PP resin, 8 parts of graphene, 6 parts by weight toughener, 4 parts of compatibilizer, 0.25 part of antioxidant, 0.8 part of lubricant are mixed evenly and then enter the extruder barrel from the main feed port of the twin-screw extruder, and the reinforced powder processed in step 1) From the side feeding port of the twin-screw extruder into the extruder barrel for mixing and extruding. The temperature in the extruder barrel is 200°C, and the screw speed is 600r/min. After extrusion, it is cooled by a cooling water tank and pelletized. Machine granulation to make finished products.

## Claims

1. A vacuum pump comprising a pump core assembly, a pump body (3) of the pump core assembly is provided with an elastic sleeve (2), a valve pin (4), and a piston (5), the elastic sleeve is disposed in a slotted hole at a suction pipe end, the piston is nested in a nail outer diameter of the valve pin, the outer diameter of the piston is sealed against inner walls of the pump body, the outer diameter of the nail ring groove at a nail end of the valve pin is snapped-fit to a buckle ring rib in a valve stem (7), a spring (8) is disposed in an area between the outer diameter of the valve stem outwardly of the pump body and an inner plug (6) outwardly of the pump body, guide ribs are disposed on the inner walls of an inner ring of the piston; wherein the outer diameter of the valve stem in the said pump body is nested into the inner diameter of the inner plug (6), the inner diameter of the pump intake of the pump body is snapped-fit and sealed against the outer diameter of a lower plug (601) of the inner plug, the inner diameter of an upper plug (603) of the inner plug outwardly of the pump body is provided with a lower elastic cavity that is larger than the inner diameter of the inner plug, the inner diameter hole of the upper plug of the inner plug is provided with an upper elastic cavity of the outer diameter of the valve stem whose outer diameter is smaller than the inner diameter of the upper plug, the spring (8) is disposed in the cavity formed by nesting the upper spring cavity of the valve stem into the lower spring cavity of the inner plug, which means that the outer diameter of the upper spring cavity at the stem rim of the valve stem is upper ring, the upper ring of the valve stem is nested into the inner diameter of the upper plug of the inner plug.

2. The vacuum pump according to Claim 1, wherein an upper stepped groove is disposed in a bottom part of the inner diameter of the upper ring (702) of the said valve stem (7), a lower stepped groove (602) is disposed in the inner diameter of the inner plug (6) at the pump intake of the pump body (3), one end of the spring (8) is fit and secured to the lower stepped groove of the inner plug, and vertical grooves (701) are uniformly distributed in the outer diameter of the valve stem at the spring.

3. The vacuum pump according to Claim 1, wherein an inner ring (703) of the piston is provided underneath the buckle ring rib of the said valve stem (7), the tip of the inner ring (501) of the piston is provided with an inner ring rim of the piston (5) extended out of the ring rim of the piston, the inner ring of the piston of the valve stem is nested hermetically with the inner ring rim of the piston, the ring rim in the bottom of the inner ring of the piston is sealed fit to the nailhead ring groove of the valve pin (4), a conical bottom cavity is disposed in the bottom part of the valve pin. When pressing the first valve pin, the bevel ring of the outer diameter of the bottom cavity hole of the valve pin is set against and limited to the inner walls of the pump body (3) above the elastic sleeve.

4. The vacuum pump according to Claim 1, wherein a Z-shaped curved adjoining rib and a hallow hole are disposed in an area between a cartridge (202) of the said elastic sleeve (2) and a center piece (201) at one side of the sleeve opening, the center piece of the elastic sleeve is set against a center conical hole (301) of the pump body (3), the center conical hole of the pump body is an inlet hole of the pump body, a stepped ring diameter (302) is provided above the center conical hole of the pump body, and the other side of the sleeve opening of the cartridge is limited to the stepped ring diameter of the pump body.

5. The vacuum pump according to Claim 1, wherein the pump body groove ring and the raised ring of the inner plug (6) are disposed on the area where the outer diameter of the pump intake of the said pump body (3) is fit to the inner plug respectively.

6. The vacuum pump according to claim 5 wherein the pump body groove ring of the said pump body and the raised ring of the inner plug are interference-fit and secured to a fixing ring groove of the inner diameter of the upper ring of the large ring (9).

7. The vacuum pump according to Claim 6, wherein the bottom part of the inner ring of the lower ring of the said large ring (9) is provided with large ring threaded groove and the lower inner ring groove of the large ring, the lower outer ring groove of the large ring is disposed in the outer diameter of the large ring threaded groove in the large ring, the lower outer ring groove of the large ring is connected to the ribbed groove of the large ring underneath, the inner diameter of the ribbed groove of the large ring is larger than that of the lower outer ring groove of the large ring, there is a clearance between the inner diameter of the lower outer ring groove of the large ring underneath the fixing ring groove of the large ring lower ring and the outer diameter of the pump body (3), raised ribs are disposed on the inner walls of the large ring ribbed groove, a top groove is disposed in the outer diameter of the fixing ring groove on the tip of the large ring, an inner ring of a head cap (10) is snapped-fit to the inner diameter of the stem rim of the valve stem, an outer ring of the head cap is nested to the inner diameter of the top groove of the large ring, wherein the diameter of the lower ring outer diameter of the large ring, the diameter of the upper ring outer diameter of the large ring, and that of the outer diameter of the head cap decrease in descending order.

8. A method for preparing an environmentally-friendly high-tech material for an improved pump core according to claim 1, **characterized in that** the valve pin (4) is made of environmentally-friendly high-tech materials, and the environmentally-friendly high-tech materials are composed of the following parts by weight of raw materials:
PP resin 60-70 parts, toughening agent 5-10 parts, compatibilizer 2-8 parts, reinforcing powder 5-10 parts, graphene 3-5 parts, antioxidant 0.2-0.4 parts, lubricant 0.5-2 parts, 0.1-0.3 parts of silane coupling agent;
the PP resin is one of homo-PP resin and co-PP resin or a mixture of both;
the toughening agent is polyolefin elastomer, ethylene/methacrylic acid copolymer , Ethylene-vinyl acetate copolymer, any one or a mixture of any two or a mixture of the three;
the reinforcing powder is mica powder and glass beads, organic fiber beads or asbestos beads according to 1-5: 2-4 mixed mixture, the particle size of the reinforced powder is 400-800 mesh;
the compatibilizer is one or both of polypropylene grafted maleic anhydride and polyethylene grafted maleic anhydride Mixture;
the toughening agent is POM, PVC, PET or PETG;
the antioxidant is a mixture of antioxidant 1076 and antioxidant 168 in a weight ratio of 1:1;
the lubricant is polyethylene, any one of wax, ethylene(bisstearamide), and pentaerythritol tetrastearate;
the silane coupling agent is one of silane coupling agent KH550 or silane coupling agent KH560.

9. The method for preparing an environmentally-friendly high-toughness PP material of an improved pump core according to claim 8, wherein the environmentally-friendly high-tech material comprises the following preparation steps:
1), powder treatment: pour the above weight parts of the reinforced powder Into a mixer equipped with a high-pressure sprayer, while stirring the powder, spray the above parts by weight of the silane coupling agent wherein the pressure of the high-pressure sprayer is 0.5MPa-1.0MPa, the stirring temperature is 60-80°C, and the stirring time is 25- 35min;
2) Extrusion and granulation: the above weight parts of PP resin, graphene, toughening agent, compatibilizer, antioxidant, and lubricant are mixed evenly and then enter the extrusion port from the main feed port of the twin-screw extruder. Out of the barrel, and the reinforced powder processed in step 1) enters the extruder barrel from the side feeding port of the twin-screw extruder for mixing and extruding, wherein thee temperature in the extruder barrel is 180-230°C., the rotation speed of the screw is 200-800r/min and after extrusion, it is cooled by a cooling water tank and pelletized by a pelletizer to make finished products.
